(19) Europäisches Patentamt
European Patent Office
Office européen des brevets

(11) **EP 2 887 649 A1**

(12) **EUROPEAN PATENT APPLICATION**

(43) Date of publication:
**24.06.2015  Bulletin 2015/26**

(51) Int Cl.:
*H04N 5/64* (2006.01)   *G02F 1/1333* (2006.01)

(21) Application number: **14176845.7**

(22) Date of filing: **14.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.12.2013  KR 20130157392**

(71) Applicant: **Samsung Display Co., Ltd.
Gyeonggi-Do (KR)**

(72) Inventors:
• **Woo, SuWan
101-901 Osan-si, Gyeonggi-do (KR)**

• **Kim, Kyung-Bae
102-1103 Seoul (KR)**
• **Kim, Kyeonghyeon
113-1501 Seongnam-si, Gyeonggi-do (KR)**
• **Song, Younggoo
104-605 Asan-si, Chungcheongnam-do (KR)**

(74) Representative: **Dr. Weitzel & Partner
Patent- und Rechtsanwälte mbB
Friedenstrasse 10
89522 Heidenheim (DE)**

(54) **Curved display panel**

(57)    A curved display panel includes a first substrate which includes a plurality of pixels, a second substrate facing the first substrate, and an image display layer disposed between the first substrate and the second substrate, where the curved display panel has a curvature radius equal to or greater than about 3250 millimeters and a thickness of the first substrate or a thickness of the second substrate is equal to or smaller than about 1.09 millimeters.

EP 2 887 649 A1

## Description

This application claims priority to Korean Patent Application No. 10-2013-0157392, filed on December 17, 2013, and all the benefits accruing therefrom under 35 U.S.C. §119, the contents of which are hereby incorporated by reference in its entirety.

BACKGROUND

1. Field

The invention relates to a curved display panel. More particularly, the invention relates to a curved display panel.

2. Description of the Related Art

A liquid crystal display ("LCD") includes two transparent substrates and a liquid crystal layer disposed between the two transparent substrates. The LCD drives liquid crystal molecules of the liquid crystal layer to control a light transmittance in each pixel, thereby displaying a desired image.
In a vertical alignment ("VA") mode LCD among various operation modes of the LCD, the liquid crystal molecules of the liquid crystal layer are vertically aligned with respect to the two substrates when an electric field is generated between the two substrates, and the vertically aligned liquid crystal molecules transmit the light, to thereby display the image. The VA mode LCD includes liquid crystal domains which align the liquid crystal molecules in different directions, and thus a viewing angle of the LCD is effectively improved. In an in-plane switching mode, the liquid crystal molecules are horizontally aligned with respect to the two substrates when the electric field is generated to transmit the light, thereby displaying the image.
In recent years, a curved display panel has been developed. The curved display panel provides a user with a curved display area, and thus the curved display panel provides an image having improved three-dimensional ("3D") effect, a sense of immersion, and virtual presence to the user.

SUMMARY

The invention provides a curved display panel having improved display quality.
Exemplary embodiments of the invention provide a curved display panel including a first substrate that includes a plurality of pixels, a second substrate facing the first substrate, and an image display layer disposed between the first substrate and the second substrate. The curved display panel has a curvature radius equal to or greater than about 3250 millimeters (mm) and a thickness of the first substrate or a thickness of the second substrate is equal to or smaller than about 1.09 millimeters (mm).
In an exemplary embodiment, the curved display panel may have a rectangular shape with long sides and short sides and is curved along the long sides or the short sides to satisfy the following Equation,

$$BrightnessDifference(\%) = \frac{C \times radian\left(\dfrac{180\,L}{2\pi}\left(\dfrac{t}{R^2}\right)\right) \times R}{P_p} \times 100 \ .$$

In the Equation, the BrightnessDifference denotes a brightness difference between a center point of the curved display panel and points respectively corresponding to L/4 and 3L/4 of the curved display panel, which are spaced apart from one of the short sides of the curved display panel and exist on an imaginary line crossing the center point and parallel to the long sides of the curved display panel, L denotes a length of one of the long sides of the curved display panel, R denotes the curvature radius of the curved display panel, t denotes the thickness of the first substrate or the thickness of second substrate, $P_p$ denotes a pitch of each of the plurality of pixels, and C denotes a real number of about 0.29 to about 0.34.
In an exemplary embodiment, the brightness difference is about 20 percent (%).
In an exemplary embodiment, the thickness of the first substrate or the thickness of the second substrate is equal to or smaller than about 1.09 mm when the curvature radius is equal to or greater than 5000 mm, and the thickness of the first substrate or the second substrate is equal to or smaller than about 0.87 mm when the curvature radius is equal to or greater than 4000 mm.

In an exemplary embodiment, the first substrate has a first curvature radius, the second substrate has a second curvature radius, and the first curvature radius is smaller or greater than the second curvature radius.

In an exemplary embodiment, the curved display panel has a rectangular shape and is curved in the long sides.

According to the above, the thickness of the substrate may be determined to allow defects caused by the brightness difference not to be recognized by the viewer when the curved display panel has a predetermined curvature, and thus the defects of the display apparatus may be effectively reduced. That is, although the misalignment occurs in the curved display panel curved in the predetermined direction, the defects caused by the brightness difference may be effectively prevented from being recognized by controlling the thickness and the curvature radius of the substrate, thereby improving the display quality of the display apparatus.

BRIEF DESCRIPTION OF THE DRAWINGS

The above and other advantages of the invention will become readily apparent by reference to the following detailed description when considered in conjunction with the accompanying drawings, in which:

FIG. 1 is a perspective view showing a display panel according to an exemplary embodiment of the invention;
FIG. 2A is a plan view showing a display panel according to an exemplary embodiment of the invention;
FIG. 2B is a cross-sectional view showing a display panel according to an exemplary embodiment of the invention;
FIG. 3 is a cross-sectional view showing a misalignment occurring in a curved display panel to which first and second substrates are applied;
FIG. 4 is a graph showing a relation between the misalignment and a brightness difference;
FIG. 5 is a view showing points at which a brightness is measured to calculate the brightness difference;
FIG. 6 is a simulated graph showing a curvature radius and a misalignment when a glass substrate having a thickness of about 0.7 millimeters (mm) is used as each of the first and second substrates;
FIG. 7 is a graph showing a relation between a thickness of a substrate and a brightness difference; and
FIG. 8 is a graph showing a relation between a curvature of a substrate and a brightness difference.

DETAILED DESCRIPTION

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the invention.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. In an exemplary embodiment, if the device in the figures is turned over, elements described as "below" or "beneath" other elements or features would then be oriented "above" the other elements or features, for example. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms, "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30%, 20%, 10%, 5% of the stated value.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the invention will be explained in detail with reference to the accompanying drawings.

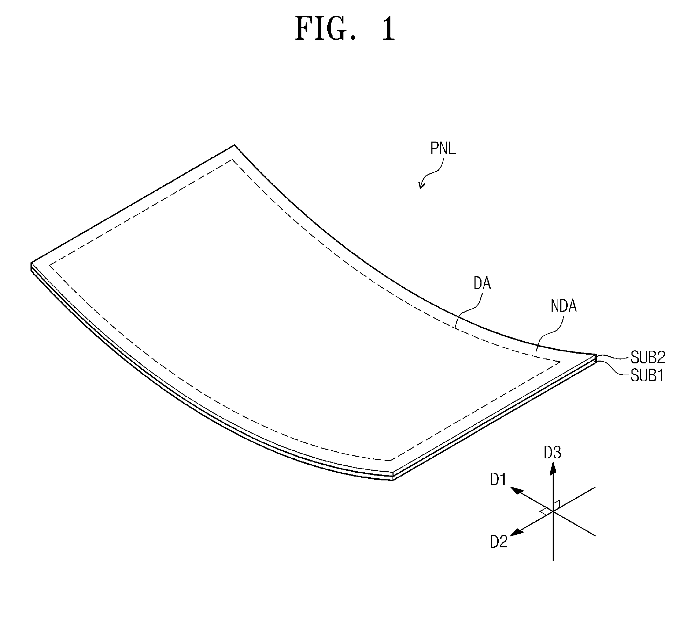

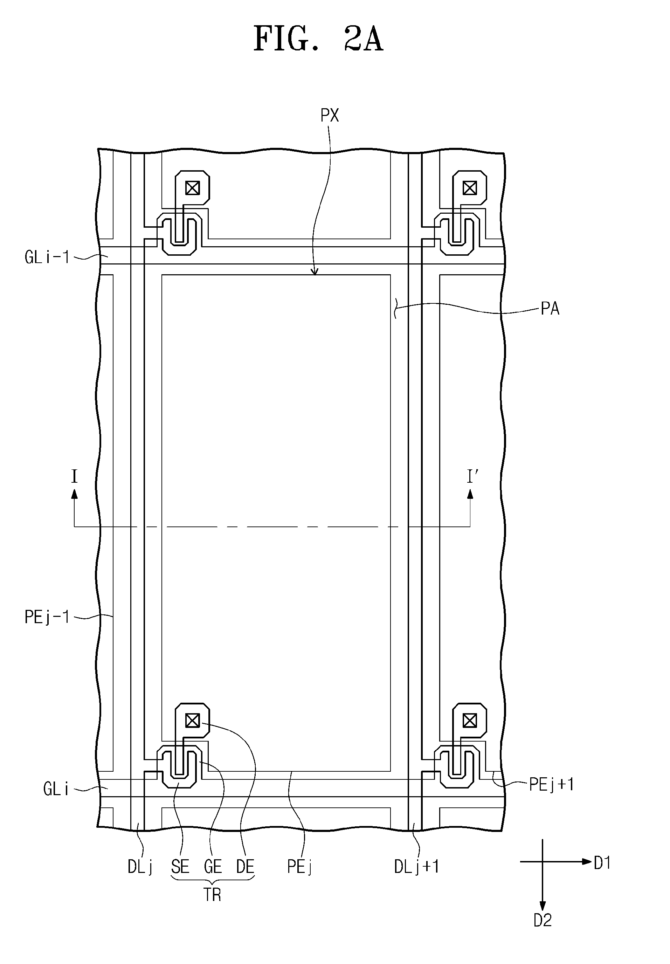

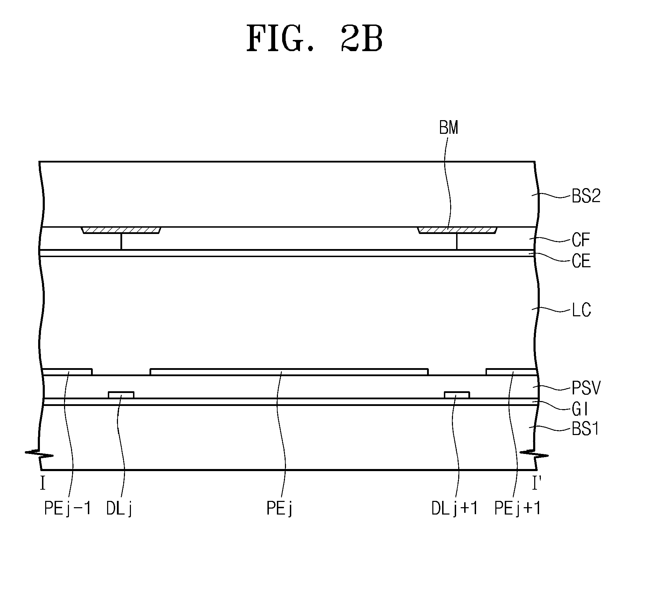

FIG. 1 is a perspective view showing a display panel according to an exemplary embodiment of the invention, FIG. 2A is a plan view showing a display panel according to an exemplary embodiment of the invention, and FIG. 2B is a cross-sectional view showing a display panel according to an exemplary embodiment of the invention. FIGS. 2A and 2B show one pixel and a line part disposed adjacent to the one pixel.

Referring to FIG. 1, a display panel PNL has a rectangular shape with a pair of long sides and a pair of short sides. The display panel PNL has a curved shape. The display panel PNL that displays an image on a curved screen is referred to as a curved display panel. A direction in which the long sides extend is referred to as a first direction D1, a direction in which the short sides extend is referred to as a second direction D2, and a direction substantially vertical to the first and second directions is referred to as a third direction D3. The display panel PNL is curved along the first direction D1, and thus the display panel PNL is concaved with respect to the third direction D3.

In the illustrated exemplary embodiment, the image is displayed toward the third direction D3 and a viewer is located at the third direction D3 with regard to the display panel PNL. However, the direction along which the display panel PNL is curved should not be limited to the first direction D1. That is, in another exemplary embodiment, the display panel PNL may be curved along the second direction D2.

In the illustrated exemplary embodiment, the display panel PNL is curved in a direction to which the viewer sees the display panel PNL, and thus the viewer recognizes the image displayed on the curved screen. When the image is displayed on the curved display panel, three-dimensional effect, a sense of immersion, and virtual presence of the image recognized by the viewer may be improved.

In exemplary embodiments, the display panel PNL may include various types of display panels, such as a liquid crystal display ("LCD") panel, an organic light emitting display ("OLED") panel, an electrophoretic display panel, an electrowetting display panel, etc. In the illustrated exemplary embodiment, the display panel PNL will be described as the LCD panel.

Referring to FIGS. 1, 2A, and 2B, the display panel PNL includes a first substrate SUB1, a second substrate SUB2 facing the first substrate SUB1, a sealant sealing the first and second substrates SUB1 and SUB2, and a liquid crystal layer LC disposed between the first substrate SUB1 and the second substrate SUB2.

The first and second substrates SUB1 and SUB2 are curved in the first direction D1. A portion or all of the first substrate SUB1 may be successively curved along the first direction D1. In addition, the second substrate SUB2 may be curved along the first substrate SUB1.

The first substrate SUB1 includes a display area DA and a non-display area NDA which is disposed adjacent to at least one side of the display area DA and in which no image is displayed. The display area DA is an area in which the image is displayed on the curved screen and faces the viewer.

The first substrate SUB1 includes a line part to transmit a signal and pixels PX arranged corresponding to pixel areas PA in a matrix form. The pixels PX are arranged in the display area DA. In the illustrated exemplary embodiment, since the pixels PX have the same structure and function with each other, only one pixel will be described in detail hereinafter.. In an exemplary embodiment, the pixel PX has a rectangular shape, for example, but it should not be limited to the rectangular shape. In another exemplary embodiment, the pixel PX may have a Z shape, for example.

Referring to FIGS. 2A and 2B, the display panel PNL includes the first substrate SUB1, the second substrate SUB2 facing the first substrate SUB1, and the liquid crystal layer LC disposed between the first substrate SUB1 and the second substrate SUB2.

The first substrate SUB1 includes a first base substrate BS1, the line part, and the pixel PX.

The line part includes a plurality of gate lines disposed on the first substrate SUB1 and a plurality of data lines crossing the gate lines.

The gate lines include first and second gate lines GLi-1 and GLi and the data lines include first and second data lines DLj and DLj+1, where i and j are natural numbers. In the illustrated exemplary embodiment, a distance between the first gate lines GLi-1 and the second gate line GLi corresponds to a length of the pixel PX and a distance between the first data line DLj and the second data line DLi+1 corresponds to a width of the pixel PX. The pixels PX are repeatedly arranged in the matrix form, and the width of the pixel PX may be called a pitch thereof

The first and second gate lines GLi-1 and GLi extend in the first direction D1 and the first and second data lines DLj and DLj+1 extend in a second direction D2 substantially perpendicular to the first direction D1. The first and second gate lines GLi-1 and GLi are insulated from the first and second data lines DLj and DLj+1 by a gate insulating layer GI disposed between the first and second gate lines GLi-1 and GLi, and the first and second data lines DLj and DLj+1, in a cross-sectional thickness direction. As shown in the exemplary embodiment of FIG. 2A, the first and second gate lines GLi-1 and GLi and the first and second data lines DLj and DLj+1 have a stripe shape, but the first and second gate lines GLi-1 and GLi and the first and second data lines DLj and DLj+1 should not be limited to the stripe shape. That is, in another exemplary embodiment, the first and second gate lines GLi-1 and GLi and the first and second data lines DLj and DLj+1 may have a bent shape.

In an exemplary embodiment, the pixel area PA is defined by the first and second gate lines GLi-1 and GLi and the first and second data lines DLj and DLj+1, but the pixel area PA should not be limited thereto or thereby. That is, in another exemplary embodiment, the pixel area PA is not defined by the first and second gate lines GLi-1 and GLi and the first and second data lines DLj and DLj+1.

Each pixel PX includes a thin film transistor ("TFT") TR connected to the line part and a pixel electrode PEj connected to the TFT TR.

The TFT TR is electrically connected to the second gate line GLi and the first data line DLj to switch a signal applied to the pixel electrode PEj. In detail, the TFT TR includes a gate electrode GE branched from the second gate line GLi, a source electrode SE branched from the first data line DLj, and a drain electrode DE electrically connected to the pixel electrode PEj. A passivation layer PSV is disposed between the pixel electrode PEj, and the drain electrode DE connected to the pixel electrode PEj.

The pixel electrode PEj is disposed in the pixel area PA. The pixel electrode PEj is spaced apart from and electrically insulated from other pixel electrodes, e.g., a left side pixel electrode PEj-1 and a right side pixel electrode PEj+1.

The second base substrate SUB2 includes a second base substrate BS2, a black matrix BM, a color filter CF, and the common electrode CE.

The black matrix BM is disposed on the second base substrate BS2 along a circumference of each pixel PX. In detail, when viewed in a plan view, the black matrix BM extends in the same direction as the direction in which the first and second gate lines GLi-1 and GLi and the first and second data lines DLj and DLj+1 extend, is overlapped with the first and second gate lines GLi-1 and GLi and the first and second data lines DLj and DLj+1, and blocks the light traveling to an edge of each pixel PX. The color filter CF displays colors, such as a red color, a green color, a blue color, etc., and is disposed on the second base substrate BS2. The common electrode CE is disposed on the color filter CF. The common electrode CE is applied with a common voltage, and generates an electric field in cooperation with the pixel electrode PEj.

In the illustrated exemplary embodiment, the common electrode CE and the color filter CF are included in the second substrate SUB2, but the common electrode CE and the color filter CF should not be limited thereto or thereby. In other exemplary embodiments, the common electrode CE and the color filter CF may be included in the first substrate SUB1.

The liquid crystal layer LC includes liquid crystal molecules having a positive or negative dielectric anisotropy. The liquid crystal molecules are aligned to be vertical or parallel to the electric field generated between the common electrode CE and the pixel electrode PEj in accordance with the dielectric anisotropy of the liquid crystal molecules.

When a gate signal is applied to the gate line, the TFT TR is turned on. Accordingly, a data signal applied to the data line is applied to the pixel electrode PEj through the TFT TR. When the data signal is applied to the pixel electrode PEj, the electric field is generated between the pixel electrode PEj and the common electrode CE. In this case, a voltage applied to the pixel electrode PEj is greater or smaller than the common voltage applied to the common electrode CE. In an exemplary embodiment, the common electrode CE may be applied with the common voltage of about zero (0) volt (V), and the pixel electrode PEj may be applied with the voltage of about 7 V. The liquid crystal molecules are driven by the electric field generated by the difference in voltage between the common voltage applied to the common electrode CE and the voltage applied to the pixel electrode PEj. Therefore, an amount of the light passing through the liquid crystal layer LC is changed, and thus a desired image is displayed.

In the illustrated exemplary embodiment, since the LCD panel is described as the display panel, the liquid crystal layer is described as an image display layer, but the invention should not be limited thereto or thereby.

In the exemplary embodiment, although the first substrate SUB1 and the second substrate SUB2 have the same size when viewed in a plan view, a misalignment may occur between the first and second substrates SUB 1 and SUB2 when the first and second substrates SUB1 and SUB2 are curved.

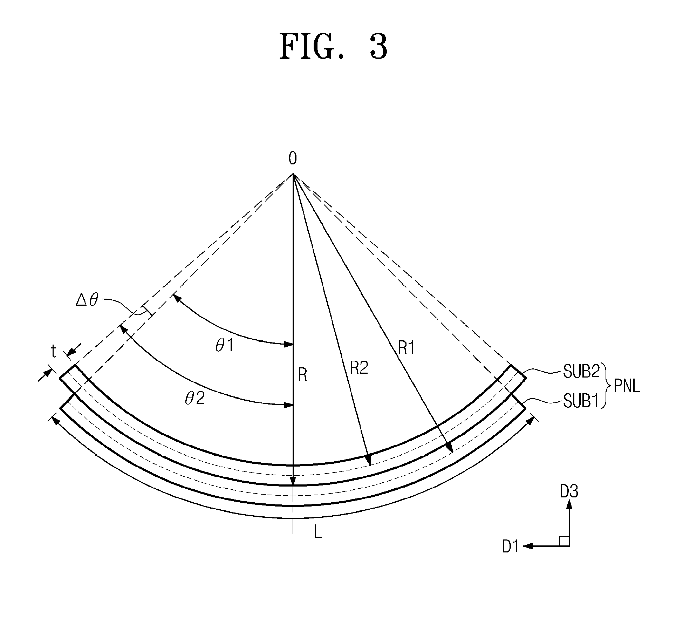

FIG. 3 is a cross-sectional view showing the misalignment occurring in the curved display panel to which first and second substrates are applied. For the convenience of explanation, only first and second substrates SUB1 and SUB2 are shown in FIG. 3, and the first and second substrates SUB1 and SUB2 have the same thickness t. Here, the first and second substrates SUB1 and SUB2 includes plural thin layers, but the thickness of the first and second substrates SUB1 and SUB2 is substantially the same as that of the first and second base substrates BS1 and BS2 since the other elements except for the first and second base substrates BS1 and BS2 have a very small thickness compared to that of the first and second base substrates BS1 and BS2. According to exemplary embodiments, the first and second base substrates BS1 and BS2 have different thicknesses from each other, and in this case, the thickness of the substrate indicates an average thickness of the thickness of the first base substrate BS1 and the thickness of the second base substrate BS2.

Referring to FIG. 3, the display panel PNL is curved in at least one direction. In an exemplary embodiment of FIG. 3, the display pane PNL is concave curved with respect to the viewer, i.e., the third direction D3. The display panel PNL is curved to have a curvature radius R with reference to "0" as a center point (hereinafter, also referred to as a starting point). The curvature radius R is obtained with respect to the starting point (0) and a neutral surface of the display panel PNL.

In the display panel PNL, each of the first and second substrates SUB1 and SUB2 may be curved at a predetermined curvature radius with reference to the starting point (0) as a center point, and thus the first and second substrates SUB1 and SUB2 serve as portions of concentric circles with reference to the starting point (0). When the curvature radius of the first substrate SUB 1 and the curvature radius of the second substrate SUB2 are referred to as a first radius R1 and a second radius R2, respectively, the second radius R2 is smaller than the first radius R1.

Referring to FIG. 3, when assuming that the first and second substrates SUB1 and SUB2 are flat without being curved, the first and second substrates SUB1 and SUB2 have the same length along a direction, e.g., the direction D1, and an edge of the first substrate SUB1 matches with an edge of the second substrate SUB2 when viewed in a cross-sectional view. However, when the display panel PNL is curved, the edge of the first substrate SUB1 does not match with the edge of the second substrate SUB2 since the first and second substrates SUB 1 and SUB2 have different curvature radiuses. The misalignment between the first and second substrates SUB1 and SUB2 becomes a maximum at the edges of the first and second substrates SUB1 and SUB2.

When the elements corresponding to the pixel are disposed on the first and second substrates SUB1 and SUB2, the elements disposed at the center portion of the first substrate SUB1 correspond to the elements disposed at the center portion of the second substrate SUB2, but the elements of the first substrate SUB1 do not correspond to the elements of the second substrate SUB2 to be dislocated with each other as the first and second substrate SUB1 and SUB2 are farther away from the center portion of the display panel PNL and closer to the edges of the display panel PNL. In an exemplary embodiment, although a first point of the first substrate SUB1 matches with a second point of the second substrate SUB2 when viewed in a plan view while the display panel PNL is flat without being curved, a difference in distances occurs between the first point of the first substrate SUB1 and the second point of the second substrate SUB2 when viewed in a plan view while the display panel is curved PNL. This phenomenon is referred to as the misalignment between the first substrate SUB1 and the second substrate SUB2.

As shown in FIG. 3, a line crossing the starting point (0) and the center portion of the display panel PNL is referred to as a reference line, an angle between the reference line and an imaginary line crossing the starting point (0) and a certain position, i.e., one edge of the first substrate SUB1 in FIG. 3, is referred to as a first angle θ1, and an angle between the reference line and an imaginary line crossing the starting point (0) and a certain position, i.e., one edge of the second substrate SUB2 in FIG. 3, is referred to as a second angle θ2. The second angle θ2 is greater than the first angle θ1. The misalignment is proportional to a difference Δθ between the first angle θ1 and the second angle θ2.

In the illustrated exemplary embodiment, the display panel PNL, which is concave curved with respect to the third direction, has been shown, but in another exemplary embodiment, the misalignment may occur in a display panel, which is convex curved with respect to the third direction D3. That is, the first curvature radius and the first angle are greater than the second curvature radius and the second angle in the display panel, which is convex curved with respect to the third direction.

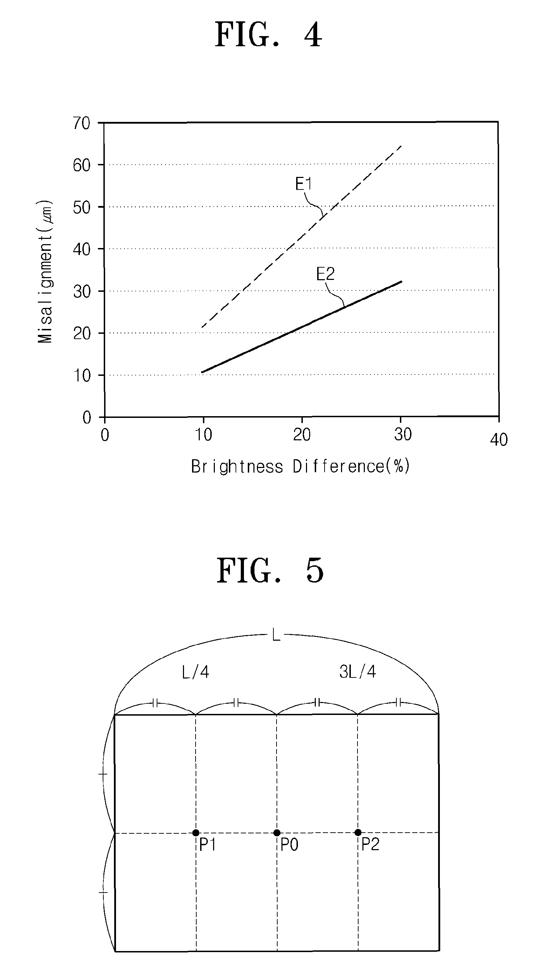

FIG. 4 is a graph showing a relation between the misalignment and a brightness difference. An x-axis represents the brightness difference as percentage (%) and an y-axis represents the misalignment value in terms of micrometers (μm). The brightness difference is obtained by measuring the brightness at the center portion and a predetermined point of the display panel.

FIG. 5 is a view showing points each at which the brightness is measured to calculate the brightness difference.

Referring to FIG. 5, when the display panel has the rectangular shape with the long sides and the short sides, a point P0 at which two diagonal lines meet each other corresponds to the center point P0 and the brightness is measured at the center point P0. In addition, the brightness is measured at points respectively corresponding to 1/4 and 3/4 of the longitudinal direction of the display panel. In detail, when a total length of the display panel is referred to as "L", the brightness is measured at the point P1 corresponding to L/4 of the display panel and the point P2 corresponding to 3L/4 of the display panel, and the points P1 and P2 exist on an imaginary line crossing the center point P0 and parallel to the long sides of the display panel. When the display panel is curved in the short sides, the brightness difference is obtained by measuring the brightness at the center point P0 and at least one point on an imaginary line crossing the center point P0 and parallel to the short sides.

Referring back to FIG. 4, E1 indicates the pixel pitch of about 213 μm and E2 indicates the pixel pitch of about 106 μm, and thus the pixel pitch indicated by E1 is greater than the pixel pitch indicated by E2. The pixel pitches E1 and E2 are applied to the display panel having a diagonal line of about 55 inches.

Referring to FIG. 4, the misalignment value is proportional to the brightness difference. This is because the amount of the light transmitting through the display panel becomes increased or decreased regardless of a predetermined value since the elements of the first substrate do not correspond to the elements of the second substrate in each pixel when the misalignment is intensified between the first substrate and the second substrate. In an exemplary embodiment, when the display panel is flat, the edge of each pixel of the first substrate is overlapped with the black matrix when viewed in a plan view, so that the light transmits through each pixel by the predetermined value. When the display panel is curved, the misalignment occurs. Accordingly, the amount of the light passing through some pixels covered by the black matrix becomes smaller than the predetermined value and the amount of the light passing through some pixels partially covered by the black matrix becomes greater than the predetermined value. As a result, the brightness difference becomes greater. The misalignment and the brightness difference become large as the pixel pitch becomes great. This is because the possibility that the elements of the first substrate do not correspond to the elements of the second substrate becomes high as the pixel pitch becomes small.

The brightness difference, the misalignment, and the pixel pitch $P_p$ satisfy the following Equation 1.

<Equation 1>

$$BrightnessDifference(\%) = \frac{Misalignment}{P_p} \times 100$$

The misalignment value is geometrically defined by the following Equation 2 and becomes great as the difference between the first and second angles and the curvature radius become great.

<Equation 2>

$$GeometricalMisalignment = \tan(\Delta\theta) \times R \approx \Delta\theta(radian) \times R$$

$$\Delta\theta = \theta_2 - \theta_1 = \frac{180L}{2\pi}\left(\frac{R_2 - R_1}{R_1 R_2}\right) \approx \frac{180L}{2\pi}\left(\frac{t}{R^2}\right)$$

$$L = 2\pi R_2 \times \frac{2\theta_2}{360} = 2\pi R_1 \times \frac{2\theta_1}{360}$$

In Equation 2, "L" denotes a length of the long side in the display panel and "t" denotes a thickness of the first substrate or the second substrate.

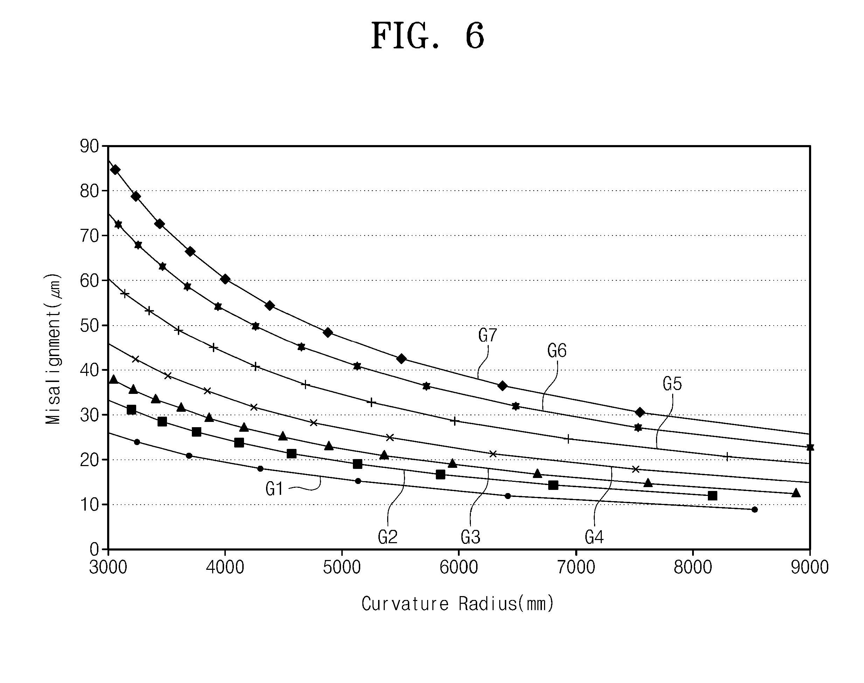

FIG. 6 is a simulated graph showing the curvature radius and the misalignment when a glass substrate having a thickness of about 0.7 millimeters (mm) is used as each of the first and second substrates. In FIG. 6, an x-axis represents the curvature radius (mm) of the display panel and a y-axis represents the misalignment value ($\mu$m) between the first substrate and the second substrate. In addition, first to seventh graphs G1 to G7 represent the misalignment in accordance with the curvature radius of 32-inch, 40-inch, 46-inch, 55-inch, 70-inch, 85-inch, and 95-inch panels, respectively. The unit of "inch" used herein represents the length of the diagonal line of each display panel.

Referring to FIG. 6, the curvature radius is inversely proportional to the misalignment, and the misalignment value becomes large as the curvature radius become small. In addition, as the size of the display panel is increased, the misalignment becomes increase. However, each value of FIG. 6 is a simulated value and is different from an actual misalignment value. Accordingly, the simulated misalignment value and the geometrical misalignment value satisfy the following Equation 3.

<Equation 3>

$$Simulated\ Misalignment = C \times \Delta\theta(radian) \times R$$

In Equation 3, "C" is a coefficient satisfying Equation 3. The coefficient "C" may be obtained by comparing the value resulted from Equation 1 and the simulated misalignment value obtained from the simulation. Table 1 shows the geometrical misalignment value, the simulated misalignment value, and the "C" value according to the size, thickness, and curvature radius of the substrate.

<Table 1>

| Size of substrate (diagonal line direction : inch) | Thickness of substrate (mm) | Curvature radius (mm) | Geometrical misalignment value ($\mu$m) | Simulated misalignment value ($\mu$m) | C |
|---|---|---|---|---|---|
| 46 | 0.5 | 3000 | 86 | 27.39 | 0.320 |
| 46 | 0.5 | 4000 | 64 | 20.31 | 0.316 |
| 46 | 0.5 | 5000 | 51 | 16.16 | 0.314 |
| 46 | 0.5 | 6000 | 43 | 13.42 | 0.313 |
| 46 | 0.7 | 3000 | 120 | 38.21 | 0.319 |
| 46 | 0.7 | 4000 | 90 | 28.31 | 0.315 |
| 46 | 0.7 | 5000 | 72 | 22.52 | 0.313 |
| 46 | 0.7 | 6000 | 60 | 18.69 | 0.312 |
| 55 | 0.5 | 3000 | 102 | 32.81 | 0.321 |
| 55 | 0.5 | 4000 | 77 | 24.25 | 0.316 |
| 55 | 0.5 | 5000 | 61 | 19.28 | 0.315 |
| 55 | 0.5 | 6000 | 51 | 16.03 | 0.314 |
| 55 | 0.7 | 3000 | 143 | 45.85 | 0.321 |
| 55 | 0.7 | 4000 | 107 | 33.85 | 0.316 |
| 55 | 0.7 | 5000 | 86 | 26.9 | 0.313 |
| 55 | 0.7 | 6000 | 72 | 22.34 | 0.312 |
| 70 | 0.5 | 3000 | 130 | 42.98 | 0.331 |
| 70 | 0.5 | 4000 | 97 | 31.31 | 0.322 |
| 70 | 0.5 | 5000 | 78 | 24.77 | 0.318 |
| 70 | 0.5 | 6000 | 65 | 19.52 | 0.301 |
| 70 | 0.7 | 3000 | 182 | 60.16 | 0.331 |
| 70 | 0.7 | 4000 | 136 | 43.76 | 0.321 |
| 70 | 0.7 | 5000 | 109 | 34.59 | 0.317 |
| 70 | 0.7 | 6000 | 91 | 27.23 | 0.300 |
| 85 | 0.5 | 3000 | 157 | 53.3 | 0.340 |
| 85 | 0.5 | 4000 | 118 | 38.13 | 0.324 |
| 85 | 0.5 | 5000 | 94 | 29.96 | 0.318 |
| 85 | 0.5 | 6000 | 78 | 23.19 | 0.296 |

(continued)

| Size of substrate (diagonal line direction : inch) | Thickness of substrate (mm) | Curvature radius (mm) | Geometrical misalignment value ($\mu$m) | Simulated misalignment value ($\mu$m) | C |
|---|---|---|---|---|---|
| 85 | 0.7 | 3000 | 220 | 74.76 | 0.340 |
| 85 | 0.7 | 4000 | 165 | 53.38 | 0.324 |
| 85 | 0.7 | 5000 | 132 | 41.89 | 0.318 |
| 85 | 0.7 | 6000 | 110 | 32.38 | 0.295 |

Referring to Table 1, the coefficient C has a range of about 0.29 to about 0.34, and the simulated misalignment value is predictable using the coefficient C.

Table 2 described below shows the misalignment value actually measured in the 46-inch display panel to confirm whether the simulated misalignment value is equal to the actual misalignment value.

<Table 2>

| Size of substrate(diagonal line direction: inch) | Thickness of substrate (mm) | Curvature radius (mm) | Geometrical misalignment value ($\mu$m) | Simulated misalignment value ($\mu$m) | Actual misalignment value ($\mu$m) | C |
|---|---|---|---|---|---|---|
| 46 | 0.5 | 4000 | 64.3 | 20.31 | 19.9 | 0.309 |
| 46 | 0.7 | 4000 | 90.0 | 28.31 | 28.4 | 0.315 |

As shown in Table 2, the actual misalignment value is substantially the same as or similar to the simulated misalignment value, and the coefficient C is in a range of about 0.29 to about 0.34. Therefore, the brightness difference may be obtained by substituting the simulated misalignment value for the actual misalignment value.

The final brightness difference is as the following Equation 4.

<Equation 4>

$$BrightnessDifference(\%) = \frac{C \times radian\left(\frac{180\,L}{2\pi}\left(\frac{t}{R^2}\right)\right) \times R}{P_p} \times 100$$

Table 3 shows the brightness difference, which is calculated by the following Equation 4, according to the pitch of the pixel, the size of the substrate, and the misalignment value, and represented together with the thickness of the substrate, which indicates the same brightness difference. In Table 3, an allowable thickness of the substrate indicates a maximum thickness representing the same brightness difference when the curvature radius is changed.

In an exemplary embodiment, when the size of the substrate is about 55 inches, for example, the thickness of the substrate is about 0.7 mm, and the curvature radius is about 13000 mm in the display panel, the brightness difference is about 10%. The allowable thickness 1 of the substrate means that the maximum thickness is about 0.22 mm to satisfy the brightness of about 10% when the curvature radius of the substrate is changed to about 3000 mm from about 13000 mm. In addition, the allowable thickness 2 of the substrate means that the maximum thickness is about 0.27 mm to satisfy the brightness of about 10% when the curvature radius of the substrate is changed to about 5000 mm from about 13000 mm.

<Table 3>

| Pitch of pixels (μm) | Size of substrate (diagonal line direction : inch) | Simulated misalignment value (μm) | Curvature radius(mm, thickness of substrate 0.7mm reference) | Brightness difference | Allowable thickness of substrate 1 (curvature radius 4000 reference; mm) | Allowable thickness of substrate 2 (curvature radius 5000 reference; mm) |
|---|---|---|---|---|---|---|
| 106 | 55 | 10.6 | 13000 | 10.0% | 0.22 | 0.27 |
| 106 | 55 | 21.3 | 6500 | 20.0% | 0.43 | 0.54 |
| 106 | 55 | 31.9 | 4300 | 30.0% | 0.65 | 0.81 |
| 178 | 46 | 17.8 | 6500 | 10.0% | 0.43 | 0.54 |
| 178 | 46 | 35.7 | 3250 | 20.0% | 0.87 | 1.09 |
| 178 | 46 | 53.5 | 2150 | 30.0% | 1.30 | 1.63 |
| 213 | 55 | 21.3 | 6500 | 10.0% | 0.43 | 0.54 |
| 213 | 55 | 42.6 | 3250 | 20.0% | 0.87 | 1.09 |
| 213 | 55 | 63.9 | 2150 | 30.0% | 1.30 | 1.63 |
| 251 | 65 | 25.1 | 6500 | 10.0% | 0.43 | 0.54 |
| 251 | 65 | 50.3 | 3250 | 20.0% | 0.87 | 1.09 |

In the exemplary embodiment, since a maximum brightness difference, which is not recognized by the viewer, is about 20%, the display panel according to the exemplary embodiment is required to have the brightness equal to or smaller than about 20 %. Accordingly, in order to satisfy the brightness difference of about 20 % in the display device, the misalignment value is preferred to be equal to or smaller than about 50.3 μm. In addition, the curvature radius is preferred to have about 3250 mm. Further, when the curvature radius is about 4000 mm, the thickness of the substrate is required to have about 0.87 mm, and when the curvature radius is about 5000 mm, the thickness of the substrate is required to have about 1.09 mm.

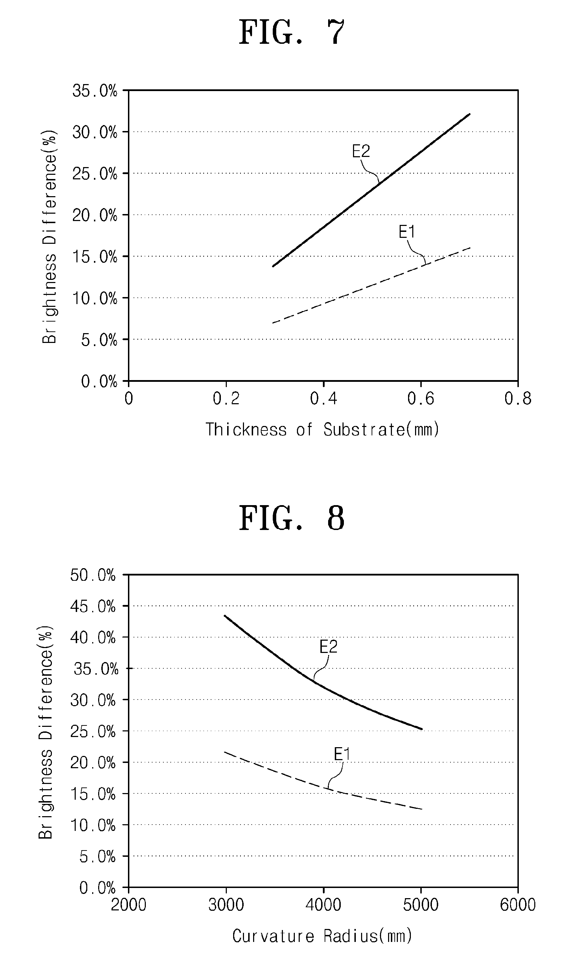

FIG. 7 is a graph showing a relation between a thickness of a substrate and a brightness difference and FIG. 8 is a graph showing a relation between a curvature of a substrate and a brightness difference. In FIGS. 7 and 8, the pixel pitch indicated by E1 is about 213 μm and the pixel pitch indicated by E2 is about 106 μm, and thus the pixel pitch indicated by E1 is greater than the pixel pitch indicated by E2. For the pixel pitches E1 and E2, the display panel having the diagonal line of about 55 inches is used. In addition, the curvature radius is maintained at about 4000 mm and the other elements are maintained without being changed. In FIG. 8, the substrate has the thickness of about 0.7 mm and the other elements are maintained without being changed except for the curvature radius and the pixel pitch.

Referring to FIG. 7, as the thickness of the substrate becomes thick, the brightness difference become large. The relation between the thickness of the substrate and the brightness difference in the portion of the substrate, which is not measured, may be predictable by extending the graph in the portion of the substrate, which is measured. Therefore, the thickness of the substrate, which satisfies the brightness difference equal to or smaller than about 20%, is about 0.9 mm in case of "E1" and is about 0.5 mm in case of "E2".

Referring to FIG. 8, as the curvature radius of the substrate becomes large, the brightness difference become small. The relation between the curvature radius and the brightness difference in the portion of the substrate, which is not measured, may be predictable by extending the graph in the portion of the substrate, which is measured. Thus, the curvature, which satisfies the brightness difference equal to or smaller than about 20 %, is about 3000 mm in case of "E1" and is about 5500 mm in case of "E2".

According to the exemplary embodiment, the thickness of the substrate may be determined to allow defects caused by the brightness difference not to be recognized by the viewer when the curved display panel has a predetermined curvature, and thus the defects of the display apparatus may be effectively reduced. That is, although the misalignment occurs in the curved display panel curved in the predetermined direction, the defects caused by the brightness difference may be effectively prevented from being recognized by controlling the thickness and the curvature radius of the substrate, thereby improving the display quality of the display apparatus.

Although the exemplary embodiments of the invention have been described, it is understood that the invention should not be limited to these exemplary embodiments but various changes and modifications can be made by one ordinary skilled in the art within the spirit and scope of the invention as hereinafter claimed.

**Claims**

1. A curved display panel comprising:

   a first substrate which includes a plurality of pixels;
   a second substrate facing the first substrate; and
   an image display layer disposed between the first substrate and the second substrate,
   wherein
   the curved display panel has a curvature radius equal to or greater than about 3250 millimeters, and
   a thickness of the first substrate or a thickness of the second substrate is equal to or smaller than about 1.09 millimeters.

2. The curved display panel of claim 1, wherein the curved display panel has a rectangular shape with long sides and short sides, is curved along the long sides or the short sides, and satisfies the following Equation,

$$BrightnessDifference(\%) = \frac{C \times radian\left(\frac{180L}{2\pi}\left(\frac{t}{R^2}\right)\right) \times R}{P_p} \times 100 \ ,$$

   wherein
   the BrightnessDifference denotes a brightness difference between a center point of the curved display panel and points respectively corresponding to L/4 and 3L/4 of the curved display panel, which are spaced apart from one of the short sides of the curved display panel and exist on an imaginary line crossing the center point and parallel to the long sides of the curved display panel,
   L denotes a length of one of the long sides of the curved display panel,
   R denotes the curvature radius of the curved display panel,
   t denotes the thickness of the first substrate or the thickness of the second substrate, Pp denotes a pitch of each of the plurality of pixels, and
   C denotes a real number of about 0.29 to about 0.34.

3. The curved display panel of claim 2, wherein the brightness difference is about 20 percent.

4. The curved display panel of claim 3, wherein the thickness of the first substrate or the thickness of the second substrate is equal to or smaller than about 1.09 millimeters when the curvature radius is equal to or greater than 5000 millimeters.

5. The curved display panel of claim 3, wherein the thickness of the first substrate or the second substrate is equal to or smaller than about 0.87 millimeters when the curvature radius is equal to or greater than 4000 millimeters.

6. The curved display panel of claim 2, wherein the first substrate has a first curvature radius, the second substrate has a second curvature radius, and the first curvature radius is smaller than the second curvature radius.

7. The curved display panel of claim 2, wherein the first substrate has a first curvature radius, the second substrate has a second curvature radius, and the first curvature radius is greater than the second curvature radius.

8. The curved display panel of claim 2, wherein the curved display panel is curved along a direction in which the long sides extend.

9. The curved display panel of claim 2, wherein the curved display panel is curved along a direction in which the short sides extend.

10. The curved display panel of claim 1, wherein
    the first substrate comprises:

    a plurality of signal lines;

an insulating layer covering the plurality of signal lines; and
a pixel electrode disposed on the insulating layer, and

wherein the second substrate comprises a common electrode.

11. The curved display panel of claim 10,
wherein the plurality of signal lines comprises:

gate lines extending in a first direction along which long sides of the curved display panel extend;
data lines which extends in a second direction along which short sides of the curved display panel extend, and crosses the first direction, and

wherein the second substrate further comprises a black matrix disposed along the gate lines and the data lines.

# FIG. 1

# FIG. 2A

# FIG. 2B

BM

BS2

CF

CE

LC

PSV

GI

BS1

I
PEj-1  DLj
PEj
DLj+1  PEj+1
I'

# FIG. 3

# FIG. 4

# FIG. 5

# FIG. 6

EP 2 887 649 A1

# FIG. 7

# FIG. 8

Europäisches
Patentamt

European
Patent Office

Office européen
des brevets

**EUROPEAN SEARCH REPORT**

Application Number

EP 14 17 6845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/161048 A1 (SATAKE TETSUYA [JP] ET AL) 25 June 2009 (2009-06-25) * abstract * * figures 1, 2, 4 * * paragraphs [0010], [0058], [0059], [0083], [0084] * | 1-11 | INV. H04N5/64 G02F1/1333 |
| A | US 2009/015747 A1 (NISHIZAWA SHIGEKI [JP] ET AL) 15 January 2009 (2009-01-15) * figures 1, 2A, 2B * * paragraphs [0009], [0017], [0053], [0055] - [0059] * | 1-11 | |
| A | DE 20 2013 100638 U1 (SAMSUNG DISPLAY CO [KR]; SAMSUNG ELECTRONICS CO LTD [KR]) 27 March 2013 (2013-03-27) * the whole document * | 1-11 | |

TECHNICAL FIELDS
SEARCHED      (IPC)

H04N
G02F

The present search report has been drawn up for all claims

| Place of search | Date of completion of the search | Examiner |
|---|---|---|
| The Hague | 15 August 2014 | Troya Chinchilla, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

**ANNEX TO THE EUROPEAN SEARCH REPORT**

**ON EUROPEAN PATENT APPLICATION NO.**                    EP 14 17 6845

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2014

| Patent document cited in search report | Publication date | Patent family member(s) | Publication date |
|---|---|---|---|
| US 2009161048 A1 | 25-06-2009 | CN 101464582 A<br>JP 5322427 B2<br>JP 2009150982 A<br>KR 20090067089 A<br>US 2009161048 A1 | 24-06-2009<br>23-10-2013<br>09-07-2009<br>24-06-2009<br>25-06-2009 |
| US 2009015747 A1 | 15-01-2009 | CN 101344651 A<br>JP 5094250 B2<br>JP 2009020168 A<br>US 2009015747 A1<br>US 2011019129 A1 | 14-01-2009<br>12-12-2012<br>29-01-2009<br>15-01-2009<br>27-01-2011 |
| DE 202013100638 U1 | 27-03-2013 | DE 202013100638 U1<br>EP 2664957 A1<br>FR 2982697 A3<br>WO 2013172538 A1 | 27-03-2013<br>20-11-2013<br>17-05-2013<br>21-11-2013 |

EPO FORM P0459

**EP 2 887 649 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130157392